# EUROPÄISCHE PATENTSCHRIFT

(11) **EP 1 090 835 B1**
(45) Veröffentlichungstag und Bekanntmachung des Hinweises auf die Patenterteilung: **07.05.2003**
(21) Anmeldenummer: 99120185.6
(22) Anmeldetag: 09.10.1999
(51) Int. Cl.: B64C 3/38, B64C 13/24, F03G 7/06, C22F 1/00

(54) **Flächenaktuator zum Verformen einer federnden Flächenstruktur**
Surface actuator for deforming an elastic plate structure
Actionneur de surface pour la déformation d'une structure plate

(43) Veröffentlichungstag der Anmeldung: 11.04.2001
(73) Patentinhaber: Deutsches Zentrum für Luft- und Raumfahrt e.V., 51147 Köln (DE)
(72) Erfinder: Campanile, Lucio Flavio, Dr., 38102 Braunschweig (DE); Kleineberg, Markus, 30966 Hemmingen (DE); Keimer, Ralf, 38108 Braunschweig (DE); Uckermann, Rainer, 38106 Braunschweig (DE); Seelecke, Stefan, Dr., 14197 Berlin (DE)
(74) Vertreter: Gerstein, Hans Joachim, Dipl.-Ing.

(56) Entgegenhaltungen:
- EP-A- 0 905 019
- DE-A- 19 804 308
- US-A- 5 367 970
- US-A- 5 662 294
- US-A- 5 804 276
- US-A- 5 931 422

## Beschreibung

Die Erfindung betrifft einen Flächenaktuator zum Verformen einer Flächenstruktur in Normalrichtung zu der Oberfläche der Flächenstruktur mit mehreren aus einem aktivierbaren Material gebildeten Aktuatorelementen, die in die Flächenstruktur eingebaut sind.

Zur Erzeugung kontrollierter Verformungen einer Flächenstruktur in Normalrichtung zu der Oberfläche der Flächenstruktur werden Aktuatoren in die Flächenstruktur eingebaut. Herkömmliche Aktuatoren, wie hydraulische oder elektrodynamische Aktuatoren, erfordern jedoch eine relativ große Bauhöhe, so daß derartige Aktuatorelemente in flachen Flächenstrukturen nicht einsetzbar sind. Zudem erfolgt die Krafteinwirkung auf die Flächenstruktur konzentriert auf einen Punkt, so daß eine Vielzahl von Aktuatorelementen eingesetzt werden müssen, um eine stetige Verformung zu erzielen. Ein derartiger Flächenaktuator ist daher sehr aufwendig zu fertigen und ist relativ teuer und wartungsanfällig. Zudem ist die Steuerung sehr komplex.

Weiterhin sind Aktuatorelemente bekannt, die aus einem aktivierbaren Werkstoff bestehen und auf dem Prinzip der gesteuerten

Ausdehnung des Werkstoffes beruhen. Derartige aktivierbare Aktuatorelemente sind z. B. Piezoelektrika und Formgedächtnislegierungen. Das Problem derartiger Aktuatorelemente ist der im Verhältnis zur wirksamen Länge des Aktuatorelementes geringe Hub. Die Aktuatorelemente müßten sich daher in Hubrichtung um ein Vielfaches des zu erzeugenden Weges erstrecken. Das Verhältnis zwischen Aktuatorlänge und erzielbarem Hub liegt bei Formgedächtnislegierungen bei ca. 50 bis 100 und bei Piezoelektrika bei ca. 1000. Derartige Aktuatorelemente aus einem aktivierbaren Material sind daher nicht zur Erzeugung von Flächenstrukturverformungen in einer Größenordnung geeignet, bei der die Verformung der Flächenstrukturdicke entspricht.

Bei derartigen Aktuatorelementen tritt ein transversaler piezoelektrischer Effekt auf, der sogenannte d₃₁-Effekt, der Auslenkungen des Aktuatorelements normal zur Hauptausdehnungsrichtung des Aktuatorelementes ermöglicht. Grundsätzlich können solche Aktuatorelemente aufgrund dieses Effektes somit zur Realisierung von Flächenaktuatoren eingesetzt werden. Die erzielbaren Verformungswege sind jedoch für viele Anwendungen nicht ausreichend. Zudem reduziert sich die Ausdehnung der einzelnen Aktuatorelemente und der maximal erzielbare Weg, wenn verschiedene Bereiche der Flächenstruktur unabhängig voneinander verformt werden sollen.

In der DE 198 04 308 A1 ist ein Profil offenbart, bei dem senkrecht zur Querschnittsfläche des Profils in der Profilachse ein Linearaktuator vorgesehen ist. Das Profil hat lokal angeordnete einzelne anisotrope Elemente, so dass gezielte Konturveränderungen bei einem Aktivieren der Aktuatormittel erzeugt werden. Die Verwölbungen werden durch die lokalen Anisotropien festgelegt.

In dem US-Patent 5,931,422 ist eine verformbare Struktur beschrieben, bei der sich Aktuatorelemente und Biegebalken parallel zueinander erstrecken. Die Biegebalken werden an einer Haltestruktur befestigt. Bei Betätigen der Aktuatorelemente verformt sich die Flächenstruktur im Bereich der Biegebalken großflächig.

In dem US-Patent 5, 804, 276, das die Merkmale des Oberbegriffs des ersten Anspruchs beinhaltet, ist eine Struktur beschrieben, bei der Flächenaktuatoren in eine Faserverbundstruktur eingebracht sind. Durch Aktivierung der Flächenaktuatoren verwendet sich die Faserverbund-Flächenstruktur. Diese Verwendung tritt über den gesamten Bereich der Flächenstruktur auf, auch wenn nur einzelne Aktuatorelemente aktiviert werden.

Zur Lösung der vorgenannten Probleme war es die Aufgabe der Erfindung einen verbesserten Flächenaktuator zum gezielten Verformen ausgewählter Bereiche einer Flächenstruktur in Normalrichtung zu der Oberfläche der Flächenstruktur mit mehreren in die Flächenstruktur eingebauten Aktuatorelementen zu schaffen.

Die Aufgabe wird durch die charakterisierenden Merkmale von Patentanspruch 1 gelöst.

Obwohl der Verformungsweg im Verhältnis zur wirksamen Länge von aktivierbaren Aktuatorelementen, wie z. B. Formgedächtnisdrähten und piezoelektrischen Elementen sehr ungünstig ist und diese daher herkömmlicherweise nicht verwendet werden können, wird dennoch ein Flächenaktuator mit derartigen Aktuatorelementen vorgeschlagen. Der Einsatz dieser Aktuatorelemente wird dadurch möglich, daß die Flächenstruktur federnd ausgebildet ist und ein anisotropes Verhalten ausweist. Durch die federnde Eigenschaft können die Aktuatorelemente zurückgestellt werden. Durch die anisotrope Eigenschaft der Flächenstruktur ist es möglich, in Richtung der Aktuatorkräfte die Flächenstruktur verhältnismäßig steif auszulegen. Senkrecht zur Wirkachse der Aktuatorelemente in Richtung der Oberfläche der Flächenstruktur führt die anisotrope Eigenschaft hingegen zu einer relativ großen Flexibilität, so daß die Auswirkungen der verschiedenen nebeneinanderliegenden Aktuatorelemente voneinander weitgehend entkoppelt sind.

Aufgrund der Steifigkeit in Wirkrichtung der Aktuatorelemente verformt sich der Querschnitt der Flächenstruktur in der Nähe des aktivierten Aktuatorelementes im Sinne einer Dickenänderung, wenn ein Aktuatorelement angesteuert wird. Die Auswirkung der Aktivierung bleibt jedoch bedingt durch das anisotrope Verhalten der Flächenstruktur lokal begrenzt, so daß die restlichen Bereiche der Flächenstruktur keine oder nur eine begrenzte Verformung erfahren. Die Verformung erfolgt entlang der Wirkrichtung des aktivierten Aktuatorelementes und nicht nur punktuell, wie bei herkömmlichen Aktuatoren.

Zwischen den Aktuatorelementen an den Kanten der Flächenstruktur sind Schlitze in Wirkrichtung der Aktuatorelemente vorgesehen. Hierdurch wird das anisotrope Verhalten der Flächenstruktur verstärkt und es werden gezielte Verformungen von Bereichen der Flächenstuktur bei Aktivierung ausgewählter Aktuatorelemente ermöglicht.

Der Flächenaktuator ist besonders vorteilhaft für dünnflächige Flächenstrukturen einsetzbar, wobei sich die Aktuatorelemente in der Flächenebene der Flächenstruktur und nicht in Richtung der Dicke der Flächenstruktur erstrecken. Die Bauraumverhältnisse in der Flächenstruktur können somit besser ausgenutzt werden, als bei herkömmlichen Aktuatoren.

Der Flächenaktuator kann prinzipiell ohne bewegliche Bauteile realisiert werden und ist damit spielfrei und wartungs- bzw. verschleißarm.

Als Aktuatorelemente werden vorzugsweise Formgedächtnisdrähte oder piezoelektrische Elemente verwendet.

Die Flächenstruktur ist vorteilhafterweise so ausgebildet, daß sie in Wirkrichtung der Aktuatorelemente versteift ist. Hierdurch kann die Aktuatorcharakteristik, insbesondere die Abhängigkeit des erzielbaren Weges von der äußeren Belastung den entsprechenden Anwendungen angepaßt werden. Die Steifigkeit in Wirkrichtung der Aktuatorelemente ist für einige aktivierbare Werkstoffe außerdem notwendig, um den aktivierbaren Werkstoff gegen unzulässige Belastung zu schützen, wie z. B. bei piezoelektrischen Stapelaktuatoren, die grundsätzlich keine Zugkräfte aufbringen können. Die federnde Eigenschaft der Flächenstruktur und die Versteifung in Wirkrichtung der Aktuatorelemente ermöglicht zudem ein Rückstellen des Aktuatorelementes und damit einen wiederholten reproduzierbaren Betrieb des Flächenaktuators. Diese Eigenschaft ist insbesondere bei Formgedächtnislegierungen notwendig, die nach Aktivierung eine Rückstellkraft benötigen, um den ursprünglichen Zustand wieder zu erreichen.

Die anisotrope Eigenschaft der Flächenstruktur kann dadurch realisiert werden, daß die Flächenstruktur aus einem Faserverbundwerkstoff gebildet ist und/oder eine stringer versteifte Schale, d. h. Versteifungsrippen in Längsrichtung der Flächenstruktur, hat.

Es ist besonders vorteilhaft, wenn die Flächenstruktur in Längsrichtung im mittleren Bereich entlang der Aktuatorelemente versteift ist. Dadurch, daß der Federquerschnitt auf diese Weise einen geradlinigen Bereich hat, der steifer ausgeführt ist, als die Bereiche an den Enden der Flächenstruktur, wird eine zylindrische Verformung der aktiven Fläche des Flächenaktuators ermöglicht, ohne daß sich der Flächenaktuator in der Querschnittsebene nennenswert krümmt.

Besonders vorteilhaft ist es, wenn sich Rillen in der Flächenstruktur über die gesamte Länge entlang der Aktuatorelemente erstrecken. Hierdurch werden die Aktuatorelemente weitgehend voneinander entkoppelt und die anisotropen Eigenschaften weiter verstärkt bzw, ermöglicht.

Zur Erhöhung des Wirkungsgrades ist es vorteilhaft, wenn die Aktuatorelemente mehrlagig ausgeführt sind oder ein Formgedächtnisdraht mehrmalig gewickelt ist.

Es ist besonders vorteilhaft, wenn die Aktuatorelemente in die Flächenstruktur integriert werden. Vor allem bei Flächenstrukturen, die aus Faserverbundmaterial aufgebaut sind, entfallen hierdurch Bohrungen für die Aktuatorelemente, so daß die Flächenstruktur durch diese Bohrungen nicht geschwächt wird.

Die Erfindung wird nachfolgend anhand der beigefügten Zeichnungen näher erläutert. Es zeigen:
- Figur 1 -: eine perspektivische Ansicht des erfindungsgemäßen Flächenaktuators;
- Figur 2 -: eine Querschnittsansicht des Flächenaktuators mit verschiedenen Ansteuerungsvarianten für die Aktuatorelemente;
- Figur 3 -: eine perspektivische Ansicht einer Ausführungsform des Flächenaktuators mit einem versteiften Federquerschnitt;
- Figur 4 -: eine Querschnittsansicht der Ausführungsform aus Figur 3;
- Figur 5 -: eine perspektivische Detailansicht einer Kante des Flächenaktuators mit Schlitzen zwischen den Aktuatorelementen;
- Figur 6 -: eine perspektivische Ansicht eines Flächenaktuators mit mehrlagig ausgeführten Aktuatorelementen;
- Figur 7 -: eine perspektivische Ansicht eines Flächenaktuators mit Aktuatorelementen, die in die Flächenstruktur integriert sind.

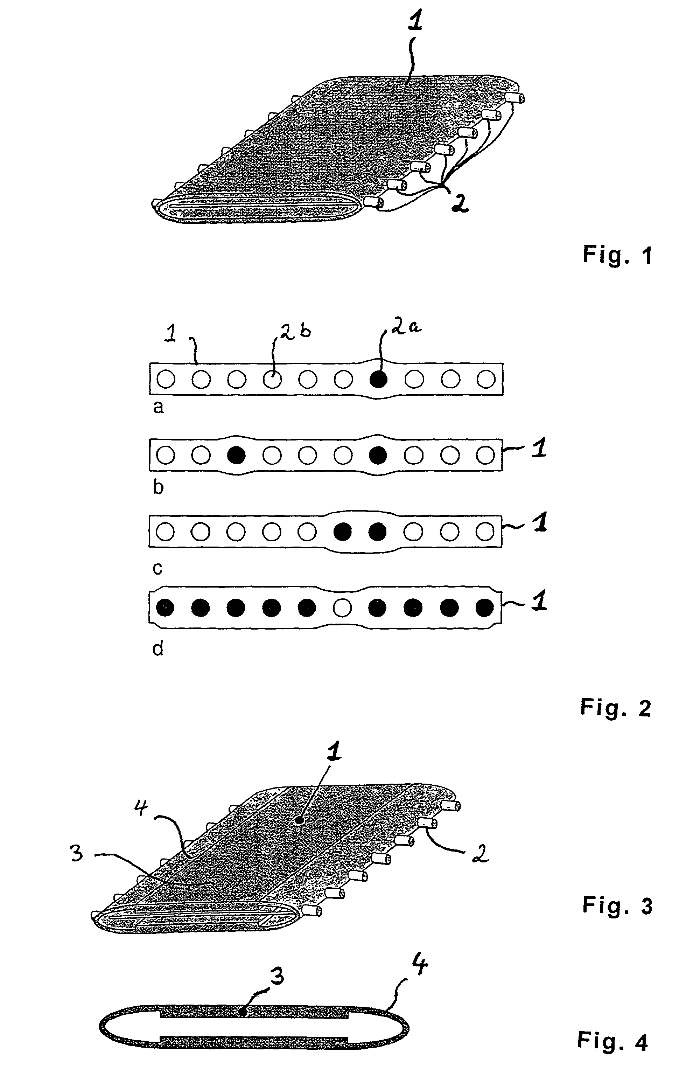

Die Figur 1 zeigt den erfindungsgemäßen Flächenaktuator in einer perspektivischen Ansicht. Der Flächenaktuator besteht aus einer Flächenstruktur 1, in die Aktuatorelemente 2 in Längsrichtung der Flächenstruktur 1 eingebaut sind. Im Verhältnis zur Länge und Breite der Flächenstruktur 1 ist diese relativ dünn. Die Flächenstruktur 1 ist z.B. die Tragfläche eines Flugzeuges oder in die Tragfläche eines Flugzeuges eingebaut. Sie kann in Normalrichtung zu der Oberfläche der Flächenstruktur 1 verformt werden. Hierzu ist die Flächenstruktur 1 in Längsrichtung entlang der Wirkrichtung der Aktuatorelemente 2 relativ steif ausgeführt. Sie hat federnde Eigenschaften, um ein Rückstellen der Aktuatorelemente 2 in die Ausgangslage der Flächenstruktur 1 zu ermöglichen. Es sind mehrere Aktuatorelemente 2 nebeneinander entlang der Breite der Flächenstruktur 1 vorgesehen. Die Aktuatorelemente bestehen aus einem aktivierbaren Werkstoff, wie z. B. aus einer Formgedächtnislegierung oder aus einem piezoelektrischen Material. Bei Aktivierung verändern die Aktuatorelemente 2 ihre Länge. Durch die hohe Steifigkeit der Flächenstruktur 1 in Längsrichtung wird jedoch eine Krümmung der Oberfläche der Flächenstruktur 1 verhindert. Lediglich die Kanten an den Befestigungspunkten der Aktuatorelemente 2 verformen sich relativ zueinander, so daß die relativ steifen Oberflächen in Längsrichtung der Flächenstruktur 1 voneinander weg nach oben gedrückt werden.

Durch die anisotrope Eigenschaft der Flächenstruktur 1, insbesondere durch die im Verhältnis zur Steifigkeit in Längsrichtung der Flächenstruktur 1 relativ große Flexibilität in Querrichtung hierzu bleibt die Verformung der Flächenstruktur 1 lokal im Bereich des aktivierten Aktuatorelementes 2.

Diese Eigenschaft ist aus der Figur 2 erkennbar, die den Flächenaktuator im Querschnitt mit verschiedenen Ansteuerungsvarianten für die Aktuatorelemente 2 zeigt. Mit den schwarzen Kreisen sind aktivierte Aktuatorelemente 2a und mit den weißen Kreisen nicht aktivierte Aktuatorelemente 2b skizziert. Die Aktuatorelemente 2 sind in die Flächenstruktur 1 eingebaut. Wenn in der Variante a nur ein Aktuatorelement 2a angesteuert wird, erfolgt eine Verformung in Form einer Ausbeulung in Längsrichtung der Flächenstruktur 1 nur im Bereich des aktivierten Aktuatorelementes 2a. Wenn zwei nicht nebeneinanderliegende Aktuatorelemente 2a aktiviert werden, wie in der Variante b skizziert ist, erfolgen auch hier wiederum die Verformungen unabhängig voneinander lokal. Ein Aktivieren von nebeneinanderliegenden Aktuatorelementen 2a, wie in der Variante c skizziert ist, führt zu einer großflächigeren Verformung im Bereich der beiden aktivierten Aktuatorelemente 2a. In der Variante d ist gezeigt, daß durch Aktivierung fast alle Aktuatorelemente 2a auch eine Vertiefung der Flächenstruktur 1 im Bereich eines ausgewählten nicht aktivierten Aktuatorelementes 2b ermöglicht werden kann.

Die Figur 3 läßt eine Ausführungsform des erfindungsgemäßen Flächenaktuators erkennen, bei dem die Flächenstruktur 1 im Längsschnitt gesehen einen geradlinigen mittleren Bereich 3 aufweist, der steifer als die Kanten 4 der Flächenstruktur 1 sind. Durch diese Versteifung im Querschnitt der federnden Flächenstruktur 1 wird erreicht, daß sich die aktive Fläche des Flächenaktuator zylindrisch verformt, ohne daß sich die Flächenstruktur 1 in der Querschnittsebene nennenswert krümmt.

Das anisotrope Verhalten der Flächenstruktur 1 kann, wie in der Figur 4 skizziert ist, durch Anbringen von Schlitzen 5 mindestens an den Kanten der Flächenstruktur 1 zwischen den Aktuatorelementen 2 verstärkt werden. Dadurch ist die Flächenstruktur 1 durch die Versteifung in Längsrichtung der Flächenstruktur 1 kaum verformbar, in Querrichtung hierzu hingegen relativ gut. Hierdurch bleiben die Auswirkungen der Verformung der angesteuerten Aktuatorelemente 2 lokal, so daß die restlichen Bereiche der Flächenstruktur 1 keine oder nur eine begrenzte Verformung erfahren.

Die Aktuatorelemente 2 können z. B. als Formgedächtnisdrähte ausgeführt sein, die durch Bohrungen in der Flächenstruktur 1 geführt und mit Hilfe von Quetschhülsen befestigt werden.

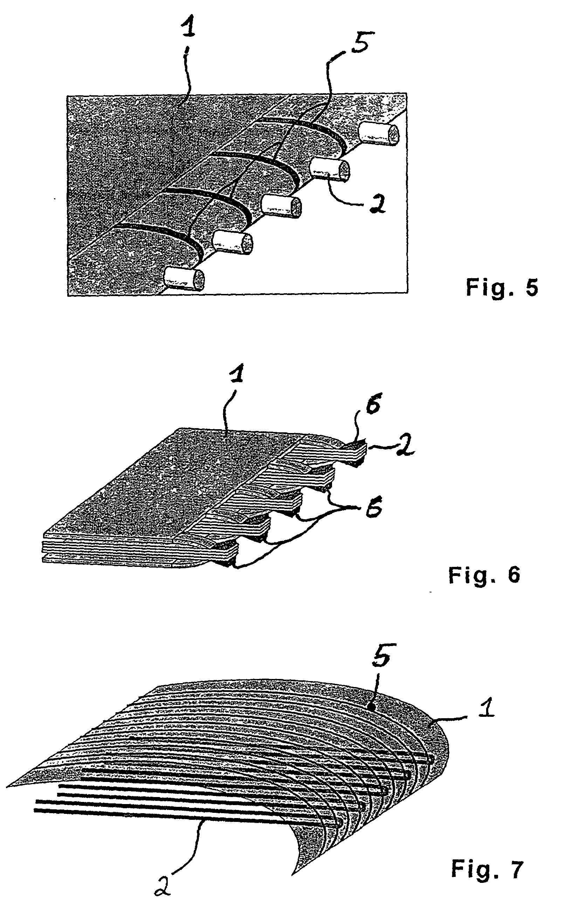

Die Figur 5 läßt einen Flächenaktuator erkennen, bei dem die Aktuatorelemente 2 mehrlagig ausgeführt sind, wobei sich die Enden der Aktuatorelemente 2 jeweils auf ein Aufnahmeelement 6 stützen. Die Aktuatorelemente 2 können aber auch als mehrmalig gewickelter Formgedächtnisdraht ausgeführt sein.

Die Figur 6 läßt einen Flächenaktuator erkennen, bei dem die Flächenstruktur 1 aus einem Faserverbundmaterial besteht, in das die Aktuatorelemente 2, wie z. B. Formgedächtnisdrähte intergriert sind. Hierdurch entfallen vorteilhafterweise Bohrungen für die Aktuatorelemente 2, so daß die Flächenstruktur 1 nicht unnötig geschwächt wird. Die Aktuatorelemente 2 sind wendelförmig zwischen den Enden der Flächenstruktur 1 geführt und bilden auf diese Weise eine Integralwicklung in dem Faserverbund der Flächenstruktur 1. Die Flächenstruktur 1 hat hierbei vorzugsweise Rillen in Längsrichtung der Flächenstruktur 1, so daß die Flächenstruktur 1 in Längsrichtung relativ steif in Querrichtung hierzu jedoch flexibel ist.

## Patentansprüche

1. Flächenaktuator mit einer federnden und anisatropen Flächenstruktur (1) und mehreren aus einem aktivierbaren Material gebildeten Aktuatorelementen (2), die in die Flächenstruktur (1) eingebaut sind zum Verformen der Flächenstruktur (1) in Normalrichtung Zur Oberfläche der Flächenstruktur (1), **dadurch gekennzeichnet, daß** zwischen den Aktuatorelementen (2) an den Seitenkanten der Flächenstruktur Schlitze in Wirkrichtung der Aktuatorelemente (2) vorgesehen sind.

2. Flächenaktuator nach Anspruch 1, **dadurch gekennzeichnet, daß** die Flächenstruktur (1) in Wirkrichtung der Aktuatorelemente (2) versteift ist.

3. Flächenaktuator nach Anspruch 1 oder 2, **dadurch gekennzeichnet, daß** die Flächenstruktur (1) aus Faserverbundwerkstoffen gebildet ist.

4. Flächenaktuator nach Anspruch 1 oder 2, **dadurch gekennzeichnet, daß** die Flächenstruktur (1) eine stringerversteifte Schale hat.

5. Flächenaktuator nach einem der vorhergehenden Ansprüche, **dadurch gekennzeichnet, daß** die Aktuatorelemente (2) Formgedächtnisdrähte und/oder piezoelektrische Elemente sind.

6. Flächenaktuator nach einem der vorhergehenden Ansprüche, **dadurch gekennzeichnet, daß** die Flächenstruktur (1) in Längsrichtung im mittleren Bereich entlang der Aktuatorelemente (2) versteift ist.

7. Flächenaktuator nach einem der vorhergehenden Ansprüche, **dadurch gekennzeichnet, daß** Rillen zwischen den Aktuatorelementen (2) in der Flächenstruktur (1) vorgesehen sind, die sich über die gesamte Länge in Wirkrichtung der Aktuatorelemente (2) erstrecken.

8. Flächenaktuator nach einem der vorhergehenden Ansprüche, **dadurch gekennzeichnet, daß** die Aktuatorelemente (2) mehrlagig ausgeführt sind.

9. Flächenaktuator nach Anspruch 8, **dadurch gekennzeichnet, daß** die Aktuatorelemente (2) jeweils aus mehreren gewickelten Formgedächtnisdrähten bestehen.

10. Flächenaktuator nach einem der vorhergehenden Ansprüche, **dadurch gekennzeichnet, daß** ein Aktuatorelement (2) wendelförmig zwischen den Enden der Flächenstruktur (1) geführt ist.

## Claims

1. Surface actuator comprising an elastic and nonisotropic plane structure (1) and several actuating elements (2) formed from an active material, which are mounted in the plane structure (1) for changing the plane structure in shape in normal direction to the surface of the plane structure **characterized in that** slots are provided between the actuating elements (2) on the lateral edges of the plane structure in direction of action of the actuating elements (2).

2. Surface actuator according to claim 1 **characterized in that** the plane structure (1) is stiffened in direction of action of the actuating elements (2).

3. Surface actuator according to claim 1 or 2 **characterized in that** the plane structure (1) formed from composite fiber materials.

4. Surface actuator according to claim 1 or 2 **characterized in that** the plane structure (1) has a shell stiffened by stringers.

5. Surface actuator according to one of the preceding claims 1 to 5 **characterized in that** the actuating elements (2) are wires of shape memory alloy and/or piezoelectric elements.

6. Surface actuator according to one of the preceding claims **characterized in that** the plane structure (1) is stiffened in longitudinal direction in the middle area along the actuating elements (2).

7. Surface actuator according to one of the preceding claims **characterized in that** grooves are provided between the actuating elements (2) in the plane structure (1) extending along the entire length in direction of action of the actuating elements (2).

8. Surface actuator according to one of the preceding claims **characterized in that** the actuating elements (2) are multi-layered.

9. Surface actuator according to claim 8 **characterized in that** the actuating elements (2) are formed from several twisted wires of shape memory alloy.

10. Surface actuator according to one of the preceding claims **characterized in that** an actuating element (2) is helically guided between the ends of the plane structure (1).

## Revendications

1. Actionneur de surface comprenant une structure plate (1) élastique et anisotrope et plusieurs éléments actionneurs (2) constitués d'un matériau activable, qui sont intégrés dans la structure plate (1) pour déformer la structure plate (1) en direction normale à la surface de la structure plate, **caractérisé en ce que** des fentes dans la direction d'action des éléments actionneurs (2) sont prévues sur les bords latéraux de la structure plate, entre les éléments actionneurs (2).

2. Actionneur de surface selon la revendication 1, **caractérisé en ce que** la structure plate (1) est rigidifiée dans la direction d'action des éléments actionneurs (2).

3. Actionneur de surface selon la revendication 1 ou 2, **caractérisé en ce que** la structure plate (1) est constituée de matériaux composites renforcés de fibres.

4. Actionneur de surface selon la revendication 1 ou 2, **caractérisé en ce que** la structure plate (1) possède une coque rigidifiée par des raidisseurs.

5. Actionneur de surface selon l'une des revendications précédentes, **caractérisé en ce que** les éléments actionneurs (2) sont des éléments piézo-électriques et/ou des fils à mémoire de forme.

6. Actionneur de surface selon l'une des revendications précédentes, **caractérisé en ce que** la structure plate est rigidifiée en direction longitudinale dans la zone centrale le long des éléments actionneurs (2).

7. Actionneur de surface selon l'une des revendications précédentes, **caractérisé en ce qu'**il est prévu dans la structure plate (1), entre les éléments actionneurs (2), des rainures qui s'étendent sur toute la longueur dans la direction d'action des éléments actionneurs (2).

8. Actionneur de surface selon l'une des revendications précédentes, **caractérisé en ce que** les éléments actionneurs (2) sont réalisés multi-couches.

9. Actionneur de surface selon la revendication 8, **caractérisé en ce que** les éléments actionneurs (2) consistent chacun en plusieurs fils à mémoire de forme enroulés.

10. Actionneur de surface selon l'une des revendications précédentes, **caractérisé en ce qu'**un élément actionneur (2) est guidé en forme spirale entre les extrémités de la structure plate (1).
